# DEMANDE DE BREVET EUROPEEN

(11) **EP 4 410 158 A1**
(43) Date de publication de la demande: **07.08.2024**
(21) Numéro de dépôt: 24153460.1
(22) Date de dépôt: 23.01.2024
(51) Int. Cl.: A47J 27/21

(54) **BOUILLOIRE**

(30) Priorité: 01.02.2023 FR 2300916
(71) Demandeur: SEB S.A., 69130 Ecully (FR)
(72) Inventeur: MANSEAU, Charles, 69134 Ecully Cedex (FR); SMAL, Chloé, 69134 Ecully Cedex (FR); ALLEMAND, Bernard, 69134 Ecully Cedex (FR)
(74) Mandataire: SEB Développement

(57) **Abrégé**

Cette bouilloire comprend un contenant (4) délimitant un volume interne (6) et comprenant un habillage externe (8) et un pot interne (10) qui présentent un bord supérieur commun (8A, 10A), une poignée de préhension (12), un bec verseur (14) et un couvercle (24). Conformément à l'invention, le pot interne (10) comprend une excroissance radiale intérieure et la bouilloire comprend une bague d'étanchéité (30) reçue sur l'excroissance radiale intérieure, la face inférieure (26) du couvercle étant propre à venir en contact axial avec la bague d'étanchéité (30) pour assurer une étanchéité entre le volume interne (6) et l'extérieur de la bouilloire.

## Description

### Domaine technique

La présente invention se rapporte au domaine des appareils de chauffage de liquides, et en particulier des bouilloires électriques. La présente invention se rapporte plus particulièrement au domaine des bouilloires dites double-paroi ou double-peau comprenant un habillage externe formant une paroi externe et un pot interne formant une paroi interne.

### Etat de la technique

Il est connu de CN216256676 U une bouilloire double-paroi munie d'un couvercle et d'un contenant comprenant un habillage externe et un pot interne qui présentent un bord supérieur commun. Le bord supérieur commun définit au moins partiellement un contour d'une ouverture d'accès à un volume interne du contenant destiné à contenir de l'eau.

Une telle bouilloire permet d'obtenir un fonctionnement plus silencieux lors de la chauffe de l'eau ainsi qu'un maintien en température de l'eau optimisé.

Cependant, dans une telle bouilloire, l'étanchéité du volume interne du contenant lorsque le couvercle de la bouilloire est en position fermée sur le contenant n'est pas garantie. Aussi, il existe un risque pour l'utilisateur, en cas notamment de basculement/chute de la bouilloire, que de l'eau bouillante puisse être éjectée de la bouilloire et brule l'utilisateur.

### Résumé de l'invention

La présente invention vise à remédier à cet inconvénient.

Le problème technique à la base de l'invention consiste à proposer une bouilloire double-paroi dont la sécurité lors de son utilisation est améliorée.

A cet effet, l'invention a pour objet une bouilloire comprenant :
- un contenant présentant un axe central configuré pour s'étendre sensiblement verticalement lorsque le contenant repose sur une surface horizontale, le contenant délimitant un volume interne destiné à contenir de l'eau et dans lequel l'eau est destinée à être chauffée et notamment portée à ébullition, le contenant comprenant un habillage externe et un pot interne qui présentent un bord supérieur commun définissant au moins partiellement un contour d'une ouverture d'accès au volume interne,
- une poignée de préhension,
- un bec verseur configuré pour être situé à l'opposé de la poignée de préhension par rapport à l'axe central du contenant,
- un couvercle configuré pour fermer le contenant, le couvercle comprenant une face inférieure configurée pour être située en regard du volume interne.
Conformément à l'invention, le pot interne comprend une excroissance radiale intérieure, et la bouilloire comprend une bague d'étanchéité reçue sur l'excroissance radiale intérieure, la face inférieure du couvercle étant propre à venir en contact axial avec la bague d'étanchéité lorsque le couvercle vient fermer le contenant pour assurer une étanchéité entre le volume interne et l'extérieur de la bouilloire.

Grâce à l'invention, l'étanchéité du volume interne de la bouilloire lorsque le couvercle ferme le contenant est assurée et sa sécurité d'utilisation est ainsi améliorée. En effet, la coopération entre l'excroissance radiale intérieure et la bague d'étanchéité et le contact axial entre la face inférieure du couvercle et la bague d'étanchéité, lorsque le couvercle ferme le contenant, permettent d'assurer l'étanchéité entre le volume interne et l'extérieur de la bouilloire. La bague d'étanchéité permet notamment d'obtenir une surface de contact élargie avec la face inférieure du couvercle et ainsi d'obtenir une surface de contact axiale optimisée pour garantir l'étanchéité entre la bague d'étanchéité et le couvercle. Ainsi, en cas de basculement/chute de la bouilloire, il n'y a pas de risque que de l'eau bouillante puisse être éjectée de la bouilloire et brule l'utilisateur.

Selon des aspects avantageux mais non obligatoires de l'invention, une telle bouilloire peut incorporer une ou plusieurs des caractéristiques suivantes, prises dans toute combinaison techniquement admissible.

Selon une caractéristique avantageuse de l'invention, l'excroissance radiale intérieure est formée par une nervure formée sur une face intérieure du pot interne, la nervure étant obtenue par emboutissage du pot interne.

Un tel agencement permet d'avoir un pot interne monobloc muni d'une excroissance radiale intérieure et d'optimiser la surface de contact entre la bague d'étanchéité et l'excroissance radiale afin d'assurer une étanchéité par contact axial entre la face inférieure du couvercle, la bague d'étanchéité et l'excroissance radiale intérieure.

Selon une caractéristique avantageuse de l'invention, l'excroissance radiale intérieure est positionnée, suivant l'axe central, entre un fond du pot interne et une zone d'entrée d'eau du bec verseur.

Un tel agencement permet de garantir l'étanchéité avec l'extérieur du pot interne et d'éviter une échappée d'eau via le bec verseur en cas de basculement/chute de la bouilloire.

Selon une caractéristique avantageuse de l'invention, le couvercle comprend un conduit de versage configuré pour convoyer de l'eau contenue dans le volume interne vers la zone d'entrée d'eau du bec verseur et la bouilloire comprend en outre un obturateur monté mobile sur le couvercle entre une position fermée dans laquelle l'obturateur obture le conduit de versage et empêche un écoulement d'eau à travers le conduit de versage, et une position ouverte dans laquelle l'obturateur libère le conduit de versage et autorise un écoulement d'eau à travers le conduit de versage.

Un tel agencement permet de garantir l'étanchéité avec l'extérieur du pot interne lorsque le couvercle ferme le contenant et d'autoriser le passage de l'eau vers le bec verseur lorsque l'utilisateur commande le déplacement de l'obturateur vers la position ouverte.

Selon une caractéristique avantageuse de l'invention, la bouilloire comprend un premier joint torique positionné dans une rainure formée sur une face périphérique externe de la bague d'étanchéité, le premier joint torique étant positionné entre la bague d'étanchéité et une face intérieure du pot interne.

Le premier joint torique permet d'assurer l'étanchéité entre la bague d'étanchéité et la face intérieure du pot interne.

Selon une caractéristique avantageuse de l'invention, la bague d'étanchéité comporte une proéminence axiale d'indexation du couvercle propre à être reçue au moins partiellement dans un logement d'indexage correspondant formé sur une face périphérique extérieure du couvercle lorsque le couvercle vient fermer le contenant.

Un tel agencement permet de garantir un bon positionnement du couvercle sur la bouilloire par l'utilisateur et un guidage du couvercle vers sa position fermée.

Selon une caractéristique avantageuse de l'invention, la bague d'étanchéité comprend une saillie radiale orientée vers l'extérieur du contenant et reçue dans un orifice formé au travers du pot interne.

Un tel agencement permet d'assurer la solidarisation de la bague d'étanchéité au pot interne.

Selon une caractéristique avantageuse de l'invention, le couvercle comprend sur une périphérie de la face inférieure un joint d'étanchéité propre à venir en contact axial avec la bague d'étanchéité lorsque le couvercle vient fermer le contenant.

Un tel agencement permet d'assurer une étanchéité optimisée entre le couvercle et la bague d'étanchéité.

Selon une caractéristique avantageuse de l'invention, la bague d'étanchéité comprend une portion annulaire formant un joint d'étanchéité en appui axial et radial sur une face intérieure du pot interne et notamment sur l'excroissance radiale intérieure, et la portion annulaire comprend au moins une projection axiale, de préférence plusieurs projections axiales s'étendant vers un fond du pot interne et formant au moins un élément d'accroche de la bague d'étanchéité à l'excroissance radiale intérieure.

Un tel agencement permet d'assurer la solidarisation de la bague d'étanchéité au pot interne et de garantir une bonne étanchéité entre la bague d'étanchéité et la face intérieure du pot interne.

Selon une caractéristique avantageuse de l'invention, la bouilloire comprend un circuit d'évacuation de vapeur configuré pour convoyer, à l'extérieur du volume interne, de la vapeur générée dans le volume interne lors d'une ébullition de l'eau contenue dans le volume interne, le circuit d'évacuation de vapeur comprenant :
∘ un premier orifice d'admission de vapeur et un deuxième orifice d'admission de vapeur qui sont prévus sur le couvercle et qui débouchent dans la face inférieure du couvercle et à proximité d'un bord périphérique de la face inférieure du couvercle, les premier et deuxième orifices d'admission de vapeur étant configurés pour être reliés fluidiquement au volume interne délimité par le contenant, et pour être disposés de part et d'autre d'un plan vertical médian de la bouilloire qui passe par le bec verseur et la poignée de préhension, et
∘ une chambre interne délimitée par le couvercle, et un premier tube d'écoulement de vapeur comprenant une première ouverture d'entrée de vapeur reliée fluidiquement au premier orifice d'admission de vapeur et une première ouverture de sortie de vapeur débouchant dans la chambre interne, et un deuxième tube d'écoulement de vapeur comprenant une deuxième ouverture d'entrée de vapeur reliée fluidiquement au deuxième orifice d'admission de vapeur et une deuxième ouverture de sortie de vapeur débouchant dans la chambre interne.

Une telle configuration de la bouilloire réduit les risques d'écoulement d'eau bouillante dans le couvercle, et donc hors de la bouilloire via la première ou la deuxième sortie de vapeur et le bec verseur, notamment lorsque la bouilloire est renversée sur le côté.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'une bouilloire selon un mode de réalisation de l'invention comprenant notamment un contenant et une base de support du contenant ;
La figure 2 est une vue en perspective similaire à la figure 1 dans laquelle un habillage externe du contenant est omis ;
La figure 3 est une vue en éclaté de la bouilloire des figures 1 et 2 dans laquelle la base de support est omise ;
La figure 4 est une vue en coupe selon le plan de coupe vertical selon la ligne IV-IV de la bouilloire de la figure 1 ;
La figure 5 est une vue en perspective d'un couvercle de la bouilloire des figures 1 et 2 en position fermée sur le contenant de sorte qu'il interagit avec une bague d'étanchéité destinée à être fixée au contenant, le contenant et le reste de la bouilloire étant omis;
La figure 6 est une vue en perspective de la bague d'étanchéité de la figure 5 ;
La figure 7 est une vue en éclaté de dessous d'un couvercle de la bouilloire des figures 1 et 2; et
La figure 8 est une vue en éclaté de dessus du couvercle de la figure 7 ;

### Description détaillée

Seuls les éléments nécessaires à la compréhension de l'invention ont été représentés. Pour faciliter la lecture des dessins, les mêmes éléments portent les mêmes références d'une figure à l'autre.

On notera que dans ce document, les termes « horizontal », « vertical », « inférieur », « supérieur », « haut », « bas », « avant », « arrière », « longitudinal », « transversal », employés pour décrire la bouilloire font référence à ce dispositif en situation d'usage, lorsqu'il repose à plat sur un plan de travail ou sur sa base d'alimentation.

De plus les termes « amont » et « aval » ou « entrée » et « sortie » sont définis en fonction d'un sens de circulation de l'eau ou de la vapeur dans la bouilloire.

Les termes « externe » et « interne » de même que les termes « extérieur » et « intérieur » sont définis par rapport à un axe central de la bouilloire et de son contenant propre à recevoir de l'eau. Ainsi une portion/partie interne sera plus proche de l'axe central qu'une portion/partie externe.

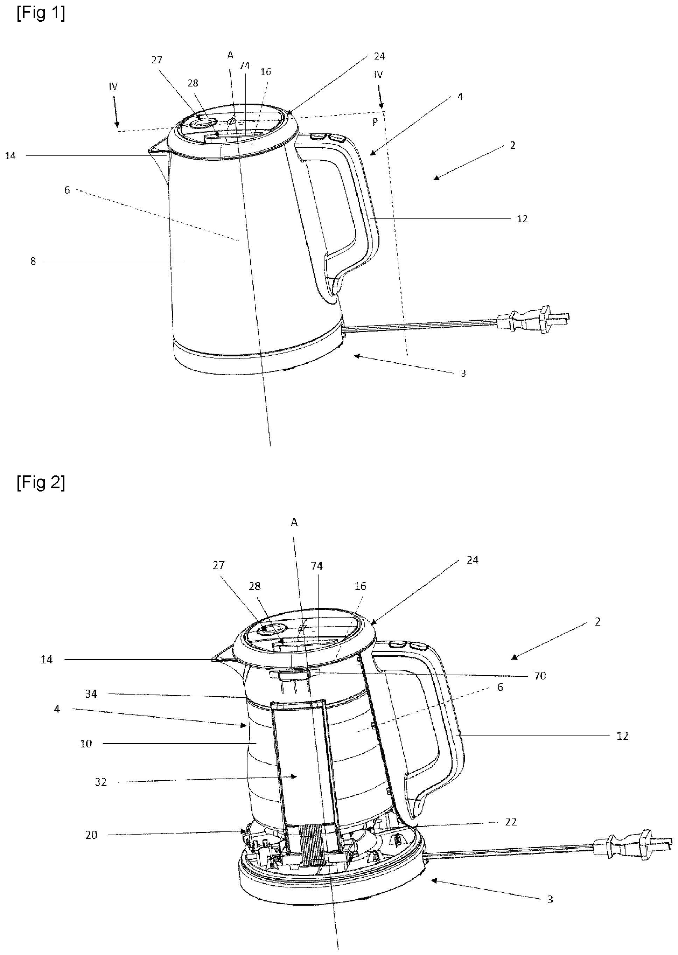

Les figures 1 et 2 représentent une bouilloire 2, et en particulier une bouilloire électrique, selon un mode de réalisation de l'invention.

La bouilloire 2 comporte une base de support 3, également appelée base d'alimentation configurée pour être alimentée électriquement par un cordon d'alimentation (visible sur les figures 1, 2, 4), et un contenant 4 configuré pour reposer sur la base de support 3.

Le contenant 4 délimite un volume interne 6 destiné à contenir de l'eau et dans lequel l'eau est destinée à être chauffée et notamment portée à ébullition.

Le contenant 4 comporte un habillage externe 8 formant une paroi externe de la bouilloire et un pot interne 10 formant une paroi interne de la bouilloire.

La bouilloire 2 comporte en outre une poignée de préhension 12 fixée au contenant 4, et un bec verseur 14 situé à l'opposé de la poignée de préhension 12 par rapport à un axe central A du contenant 4. Le bec verseur 14 peut par exemple être situé au niveau d'une ouverture de remplissage supérieure 16 du contenant 4.

L'ouverture de remplissage supérieure 16 est également appelée ouverture d'accès 16 au volume interne 6.

L'axe central A du contenant 4 est configuré pour s'étendre sensiblement verticalement lorsque le contenant 4 repose sur une surface horizontale. De façon avantageuse, le contenant 4 présente une forme générale de révolution autour de l'axe central A.

La bouilloire 2 comprend également un fond chauffant 20 situé sous le volume interne 6 et notamment sous le pot interne 10. Le fond chauffant 20 est configuré pour chauffer l'eau contenue dans le volume interne 6. De façon connue, le fond chauffant 20 loge un élément électrique chauffant 22 configuré pour être alimenté électriquement lorsque le contenant 4 repose sur la base d'alimentation 3.

La bouilloire 2 comporte en outre un couvercle 24 configuré pour fermer le contenant 4 et pourvu d'une face inférieure 26 configurée pour être située en regard du volume interne 6 du contenant 4.

La bouilloire 2 comporte de plus un obturateur 27 monté mobile entre une position d'autorisation de circulation d'eau depuis le volume interne 6 vers le bec verseur 14, dite position ouverte, et une position de blocage de la circulation d'eau vers le bec verseur 14, dite position fermée.

La bouilloire comprend également un dispositif de fixation 28 configuré pour fixer de manière amovible, c'est-à-dire de manière temporaire et réversible, le couvercle 24 au contenant 4.

La bouilloire 2 comprend également une bague d'étanchéité 30 propre à être fixée au contenant 4 et destinée à être en contact étanche avec la face inférieure 26 du couvercle 24 lorsque le couvercle ferme le contenant 4. La bague d'étanchéité 30 est avantageusement en matériau plastique.

Comme représenté à la figure 2, la bouilloire comprend également un organe d'affichage lumineux 32 positionné entre l'habillage externe 8 et le pot interne 10. L'organe d'affichage 32 est propre à afficher notamment la température de l'eau comprise dans le contenant 4 ainsi qu'avantageusement un mode de chauffe sélectionné par l'utilisateur. L'organe d'affichage lumineux 32 est propre à être alimenté en énergie électrique via la base d'alimentation 3.

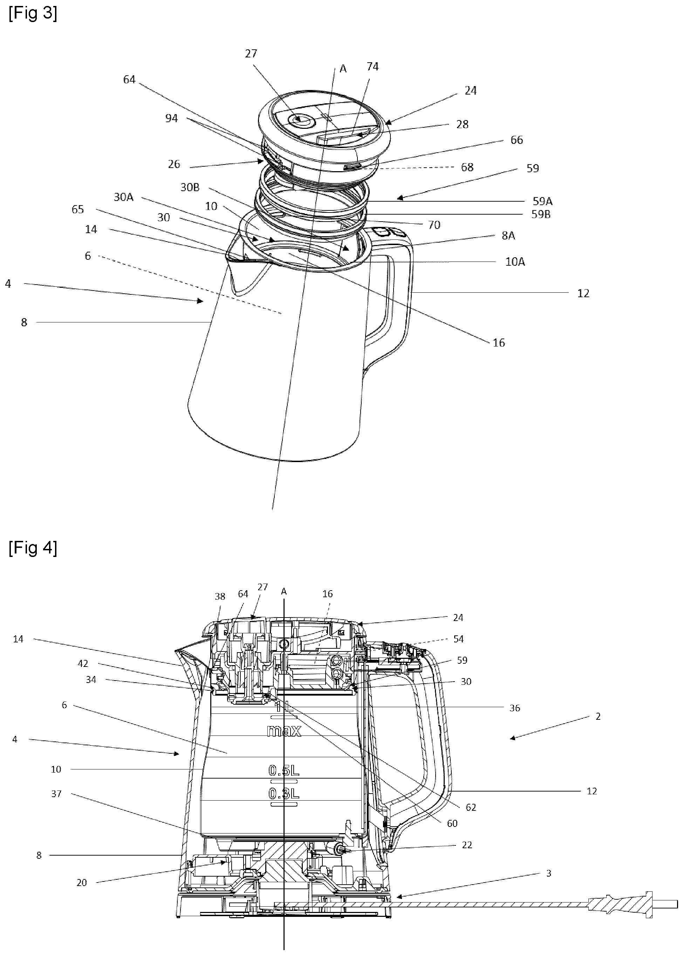

Comme représenté à la figure 3, l'habillage externe 8 et le pot interne 10 présentent un bord supérieur 8A, 10A commun définissant au moins partiellement un contour de l'ouverture d'accès 16 au volume interne 6.

On entend par bord supérieur commun, le fait que le bord supérieur 10A du pot interne 10 est en contact avec le bord supérieur 8A de l'habillage externe 8.

L'habillage externe 8 est de préférence en matériau plastique tandis que le pot interne 10 est de préférence en acier inoxydable.

Un tel agencement permet d'avoir un pot interne entièrement en acier inoxydable jusqu'en haut de la bouilloire ce qui permet de limiter les contact de l'eau avec des pièces plastiques.

Le pot interne 10 forme le volume interne 6 destiné à contenir de l'eau.
le pot interne 10 comprend une excroissance radiale intérieure 34. L'excroissance radiale intérieure 34 est formée par une nervure formée sur une face intérieure 36 du pot interne 10. La nervure est obtenue de préférence par emboutissage du pot interne 10.

Avantageusement et comme représenté sur les figures, l'excroissance radiale intérieure 34 s'étend sur toute la circonférence intérieure du pot interne 10.

Comme visible à la figure 4, l'excroissance radiale intérieure 34 est positionnée, suivant l'axe central A, entre un fond 37 du pot interne 10 et une zone d'entrée d'eau 38 du bec verseur 14.

La bague d'étanchéité 30 est propre à être fixée au pot interne 10 et est reçue/agencée sur l'excroissance radiale intérieure 34.

Le fait d'avoir une excroissance radiale intérieure 34 formée par modification de la forme du pot interne 10 permet d'éviter l'ajout d'une pièce supplémentaire sur le pot interne pour recevoir la bague d'étanchéité 30 et donc de simplifier la structure de la bouilloire 2. En outre cela permet d'éviter des opérations de soudage qui sont complexes et présente un risque d'oxydation de l'acier liée à la soudure.

La face inférieure 26 du couvercle 24 est propre à venir en contact axial avec la bague d'étanchéité 30 lorsque le couvercle vient fermer le contenant 4 pour assurer une étanchéité entre le volume interne 6 et l'extérieur de la bouilloire 2.

Comme visible aux figures 4 à 6, la bague d'étanchéité 30 comprend une portion annulaire 30A formant un joint d'étanchéité en appui axial et radial sur la face intérieure 36 du pot interne 10 et notamment sur l'excroissance radiale intérieure 34. Avantageusement la portion annulaire 30A est en contact axial et radial avec la face intérieure 36 et notamment avec l'excroissance radiale intérieure 34.

La bague d'étanchéité 30 comprend également une proéminence axiale 30B d'indexation du couvercle 24.

La portion annulaire 30A comprend au moins une projection axiale 40, de préférence plusieurs projections axiales 40 s'étendant vers le fond 37 du pot interne 10 et formant au moins un élément d'accroche de la bague d'étanchéité 30 à l'excroissance radiale intérieure 34.

Avantageusement le au moins un élément d'accroche est propre à venir se fixer sur l'excroissance radiale intérieure 34 par coopération de forme et notamment par clippage.

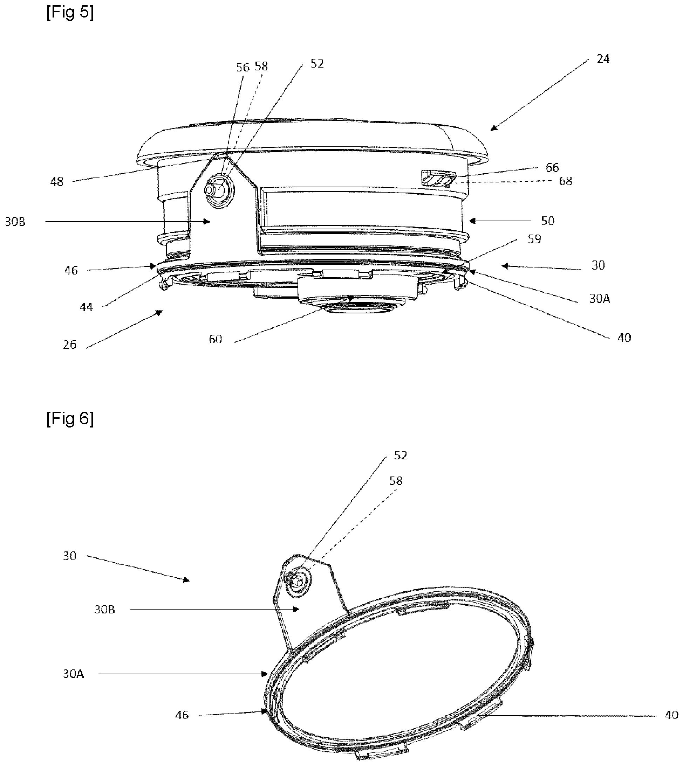

En variante, les projections axiales représentées aux figures 5 et 6 sont remplacées par une seule projection axiale formant un élément d'accroche continu sur la périphérie externe de la bague d'étanchéité 30 propre à coopérer avec l'excroissance radiale intérieure 34 sur tout son périmètre. Une telle configuration permet de garantir la fixation de la bague d'étanchéité 30 au pot interne et notamment à l'excroissance radiale intérieure 34 et d'optimiser l'étanchéité entre la bague d'étanchéité et la face intérieure 36, la projection axiale assurant à la fois une fonction d'accroche et une fonction d'étanchéité.

La bouilloire 2 comprend un premier joint torique 42 (Figure 3) positionné dans une rainure 44 formée sur une face périphérique externe 46 de la bague d'étanchéité 30 notamment au niveau de la portion annulaire 30A. La rainure 44 est positionné au-dessus des projections axiales 40 suivant l'axe central A.

Le premier joint torique 42 est positionné entre la bague d'étanchéité 30 et la face intérieure 36 du pot interne 10. Plus précisément, le premier joint torique 42 est positionné selon l'axe central A entre la bague d'étanchéité 30 et la face intérieure 36 du pot interne 10 et est en contact/appui axial avec l'excroissance radiale intérieure 34.

En variante, le joint torique 42 est en contact/appui radial avec la face intérieure 36 et n'est pas en contact avec l'excroissance radiale intérieure 34. La bague d'étanchéité 30 assure alors le contact axial avec l'excroissance radiale intérieure 34.

La proéminence axiale 30B d'indexation du couvercle 24 forme un dispositif d'indexage angulaire, également nommé dispositif de détrompage, configuré pour définir une unique position de fixation du couvercle 24 sur le contenant 4.

Comme représenté à la figure 5, la proéminence axiale 30B est propre à être reçue au moins partiellement dans un logement d'indexage correspondant 48 formé sur une face périphérique extérieure 50 du couvercle 24 lorsque le couvercle 24 vient fermer le contenant 4.

La bague d'étanchéité 30 comprend également une saillie radiale 52 orientée vers l'extérieur du contenant 4 et reçue dans un orifice 54 formé au travers du pot interne 10.

La saillie radiale 52 est de préférence formée sur la proéminence axiale 30B.

La bague d'étanchéité 30 comprend un deuxième joint torique 56 entourant l'orifice 54 lorsque la bague d'étanchéité 30 est fixée au pot interne. Le deuxième joint torique 56 est reçu dans un logement 58 formé sur la face périphérique externe 46 de la bague d'étanchéité 30 au niveau de la proéminence axiale 30B.

Selon le mode de réalisation représenté, le couvercle 24 comprend sur un contour extérieur, c'est-à-dire sur sa face périphérique extérieure 50 un joint d'étanchéité 59 propre à venir en contact axial avec la bague d'étanchéité 30 lorsque le couvercle 24 vient fermer le contenant 4. Le joint d'étanchéité 59 est positionné sur la périphérie de la face inférieure 26 du couvercle 24 et est propre à assurer un contact étanche avec la bague d'étanchéité 30 lorsque le couvercle 24 est en position fermée sur le contenant 4.

Avantageusement, comme représenté à la figure 3, le joint d'étanchéité 59 est formé par deux joints concentriques 59A, 59B assemblés l'un avec l'autre.

Le couvercle 24 comporte un conduit de versage 60 configuré pour convoyer de l'eau contenue dans le volume interne 6 vers la zone d'entrée d'eau 38 du bec verseur 14.

Le conduit de versage 60 comporte plus particulièrement une ouverture d'entrée d'eau 62 débouchant dans la face inférieure 26 du couvercle 24, et une ouverture de sortie d'eau 64 débouchant dans la face périphérique extérieure 50 du couvercle 24 et destinée à être située sensiblement en regard du bec verseur 14 lorsque le couvercle 24 est fixé au contenant 4. Plus précisément, l'ouverture de sortie d'eau 64 est propre à être positionnée en regard d'une ouverture 65 traversant le pot interne lorsque le couvercle 24 est fixé au contenant 4, ladite ouverture 65 étant elle-même située en regard du bec verseur et notamment de la zone d'entrée d'eau 38 du bec verseur 14.

L'obturateur 27 est monté mobile sur le couvercle 24 entre une position fermée dans laquelle l'obturateur obture le conduit de versage 60 et empêche un écoulement d'eau contenu dans le volume interne 6 à travers le conduit de versage 60, et une position ouverte dans laquelle l'obturateur 27 libère le conduit de versage 60 et autorise un écoulement d'eau à travers le conduit de versage 60.

L'obturateur 27 est par exemple un bouton bistable de type bouton d'actionnement de stylo à bille.

Le dispositif de fixation 28 comprend deux organes de fixation 66, tels que des doigts de fixation, prévus sur le couvercle 24 et diamétralement opposés. Chaque organe de fixation 66 est logé dans le couvercle 24 et est configuré pour faire saillie hors du couvercle 24 à travers une ouverture traversante 68 respective qui débouche dans la face périphérique extérieure 50 du couvercle 24.

Dans l'exemple représenté, le dispositif de fixation 28 comprend des logements de fixation 70 ménagés dans le contenant 4 et notamment dans le pot interne 10 et configurés pour loger respectivement les organes de fixation 66 lorsque le couvercle 24 est en position fermé sur le contenant 4.

Les organes de fixation 66 sont montés coulissants par rapport au couvercle 24 selon une direction de coulissement et entre une position de fixation dans laquelle chaque organe de fixation 66 est configuré pour coopérer avec son logement de fixation respectif 70 de manière à fixer le couvercle 24 au contenant 4, et une position de libération dans laquelle chaque organe de fixation 66 est configuré pour libérer le logement de fixation respectif 70 de telle sorte que le couvercle 24 peut être retiré du contenant 4. De façon avantageuse, la direction de coulissement s'étend sensiblement radialement par rapport à un axe central du couvercle 24 qui est confondu avec l'axe central A du contenant 4 lorsque le couvercle 24 est positionné sur le contenant 4.

Le dispositif de fixation 28 comporte un organe de rappel 72 logé dans le couvercle 24 et configuré pour rappeler les organes de fixation 66 dans la position de fixation.

La bouilloire 2 comporte un mécanisme d'actionnement 74 prévu sur le couvercle 24 et configuré pour déplacer les organes de fixation 66 dans la position de libération lorsque le mécanisme d'actionnement 74 est actionné par un utilisateur.

La bouilloire 2 comporte également un circuit d'évacuation de vapeur configuré pour convoyer, à l'extérieur du volume interne 6 et par exemple vers l'extérieur de la bouilloire 2, de la vapeur générée dans le volume interne 6 lors d'une ébullition de l'eau contenue dans le volume interne 6.

Le circuit d'évacuation de vapeur comprend notamment un premier orifice d'admission de vapeur 80 et un deuxième orifice d'admission de vapeur 82 qui sont prévus sur le couvercle 24 et qui débouchent dans la face inférieure 26 du couvercle 24 et à proximité d'un bord périphérique de la face inférieure 26 du couvercle 24. Lorsque le couvercle 24 est fixé au contenant 4 et que ce dernier repose sur une surface horizontale, les premier et deuxième orifices d'admission de vapeur 80, 82 débouchent dans le volume interne 6 délimité par le contenant 4 et au-dessus d'un niveau de remplissage maximal du contenant 4.

Selon le mode de réalisation représenté, les premier 80 et deuxième 82 orifices d'admission de vapeur 33, 34 sont disposés de part et d'autre d'un plan vertical médian P de la bouilloire 2, visible à la figure 1, qui passe par le bec verseur 14 et la poignée de préhension 12, et sont avantageusement disposés de manière symétrique par rapport au plan vertical médian P de la bouilloire 2.

Selon le mode de réalisation représenté, les premier 80 et deuxième 82 orifices d'admission de vapeur 33, 34 sont situés dans une moitié avant de la face inférieure 26 du couvercle 24.

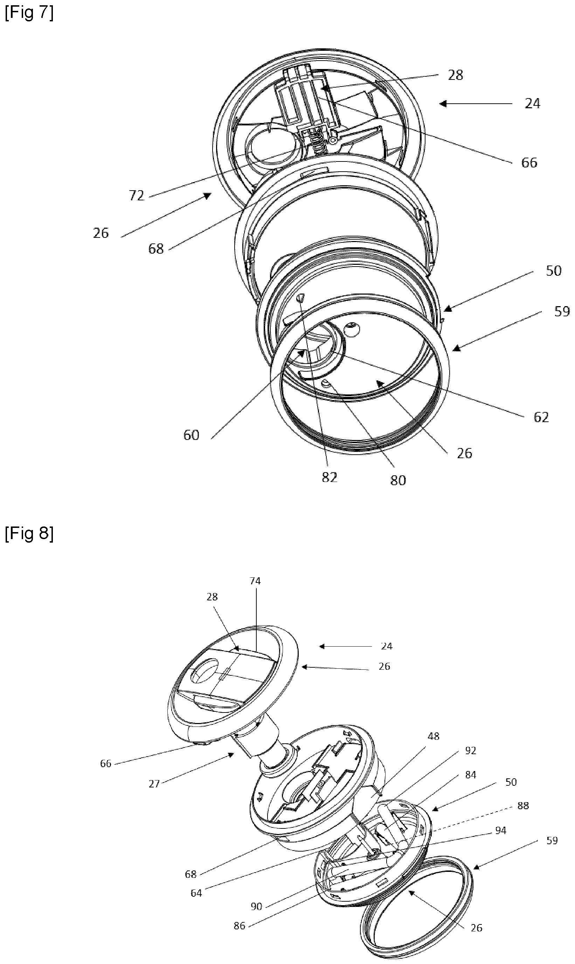

Comme montré plus particulièrement sur la figure 8, le circuit d'évacuation de vapeur comprend également un premier tube d'écoulement de vapeur 84 comprenant une première ouverture d'entrée de vapeur reliée fluidiquement au premier orifice d'admission de vapeur 80 et une première ouverture de sortie de vapeur 86 débouchant dans une chambre interne 88 délimitée par le couvercle 24, et un deuxième tube d'écoulement de vapeur 90 comprenant une deuxième ouverture d'entrée de vapeur reliée fluidiquement au deuxième orifice d'admission de vapeur 82 et une deuxième ouverture de sortie de vapeur 92 débouchant dans la chambre interne 88. De façon avantageuse, les premier et deuxième tubes d'écoulement de vapeur 84, 90 sont logés dans la chambre interne 88, et présentent chacun une section transversale qui est circulaire. De façon avantageuse, chacun des premier et deuxième tubes d'écoulement de vapeur 84, 90 présente une section de passage qui est sensiblement constante le long de sa longueur.

Les première et deuxième ouvertures de sortie de vapeur 86, 92 sont plus particulièrement configurées pour être disposées de part et d'autre du plan vertical médian P de la bouilloire 2, et avantageusement pour être disposées de manière symétrique par rapport au plan vertical médian P de la bouilloire 2. Selon le mode de réalisation représenté sur les figures, les première et deuxième ouvertures de sortie de vapeur 86, 92 sont situées dans une partie avant de la chambre interne 88, et sont configurées pour être orientées vers le bec verseur 14.

Selon le mode de réalisation représenté sur la figure 8, chacun des premier et deuxième tubes d'écoulement de vapeur 84, 90 présente une forme générale en V.

Le premier tube d'écoulement de vapeur 84 est configuré pour être incliné par rapport à l'horizontale lorsque le contenant 4 repose sur une surface horizontale, de manière à guider de l'eau contenue dans le premier tube d'écoulement de vapeur 84 vers le premier orifice d'admission de vapeur 80, et le deuxième tube d'écoulement de vapeur 90 est configuré pour être incliné par rapport à l'horizontale lorsque le contenant 4 repose sur une surface horizontale, de manière à guider de l'eau contenue dans le deuxième tube d'écoulement de vapeur 90 vers le deuxième orifice d'admission de vapeur 82. Ces dispositions limitent les risques d'accumulation d'eau et de stagnation d'eau dans le couvercle 24.

Le circuit d'évacuation de vapeur comprend de plus plusieurs ouvertures d'évacuation de vapeur 94 prévues sur le couvercle 24 et reliées fluidiquement à la chambre interne 88 délimitée par le couvercle 24. Les ouvertures d'évacuation de vapeur 94 sont configurées pour permettre une évacuation de la vapeur contenue dans la chambre interne 88 vers l'extérieur de la bouilloire 2, notamment via l'ouverture 65 et le bec verseur 14.

Plus précisément, les ouvertures d'évacuation de vapeur 94 débouchent dans la face périphérique extérieure 50, et sont situées à proximité de l'ouverture de sortie d'eau 64. Les ouvertures d'évacuation de vapeur 94 sont donc configurées pour être situées à proximité du bec verseur 14, et par exemple pour être situées en regard du bec verseur 14, lorsque le couvercle 24 est fixé au contenant 4.

La bouilloire 2 est configurée :
- de telle sorte que, lorsque la bouilloire 2 est renversée et que la poignée de préhension 12 et un premier côté latéral, à savoir le côté gauche, du contenant 4 reposent de manière stable sur une surface horizontale, le premier orifice d'admission de vapeur 80 est situé au-dessus du niveau d'eau dans le volume interne 6, et
- de telle sorte que, lorsque la bouilloire 2 est renversée et que la poignée de préhension 12 et un deuxième côté latéral, à savoir le côté droit, du contenant 4 reposent de manière stable sur une surface horizontale, le deuxième orifice d'admission de vapeur 82 est situé au-dessus du niveau d'eau dans le volume interne 6.

Un tel positionnement des premier et deuxième orifices d'admission de vapeur 80, 82 permet d'éloigner ces derniers le plus possible du niveau d'eau lorsque la bouilloire 2 est basculée et que la poignée de préhension 12 et un côté latéral du contenant 4 reposent par exemple sur un plan de travail. Ainsi, la bouilloire 2 selon la présente invention permet d'éviter ou du moins de limiter considérablement les risques d'écoulement d'eau bouillante hors de la bouilloire 2 en cas de renversement de cette dernière.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Bouilloire (2) comprenant :
- un contenant (4) présentant un axe central (A) configuré pour s'étendre sensiblement verticalement lorsque le contenant (4) repose sur une surface horizontale, le contenant (4) délimitant un volume interne (6) destiné à contenir de l'eau et dans lequel l'eau est destinée à être chauffée et notamment portée à ébullition, le contenant (4) comprenant un habillage externe (8) et un pot interne (10) qui présentent un bord supérieur commun (8A, 10A) définissant au moins partiellement un contour d'une ouverture d'accès (16) au volume interne (6),
- une poignée de préhension (12),
- un bec verseur (14) configuré pour être situé à l'opposé de la poignée de préhension (12) par rapport à l'axe central (A) du contenant (4),
- un couvercle (24) configuré pour fermer le contenant (4), le couvercle (24) comprenant une face inférieure (26) configurée pour être située en regard du volume interne (6),
**caractérisée en ce que** le pot interne (10) comprend une excroissance radiale intérieure (34), et **en ce que** la bouilloire (2) comprend une bague d'étanchéité (30) reçue sur l'excroissance radiale intérieure (34), la face inférieure (26) du couvercle étant propre à venir en contact axial avec la bague d'étanchéité (30) lorsque le couvercle vient fermer le contenant pour assurer une étanchéité entre le volume interne (6) et l'extérieur de la bouilloire.

2. Bouilloire (2) selon la revendication 1, dans laquelle l'excroissance radiale intérieure (34) est formée par une nervure formée sur une face intérieure (36) du pot interne (10), la nervure étant obtenue par emboutissage du pot interne (10).

3. Bouilloire (2) selon l'une quelconque des revendications précédentes, dans laquelle l'excroissance radiale intérieure (34) est positionnée, suivant l'axe central (A), entre un fond (37) du pot interne (10) et une zone d'entrée d'eau (38) du bec verseur (14).

4. Bouilloire (2) selon la revendication 3, dans laquelle le couvercle (24) comprend un conduit de versage (60) configuré pour convoyer de l'eau contenue dans le volume interne (6) vers la zone d'entrée d'eau du bec verseur (14) et dans laquelle la bouilloire (2) comprend en outre un obturateur (27) monté mobile sur le couvercle (24) entre une position fermée dans laquelle l'obturateur (27) obture le conduit de versage (60) et empêche un écoulement d'eau à travers le conduit de versage (60), et une position ouverte dans laquelle l'obturateur (27) libère le conduit de versage (60) et autorise un écoulement d'eau à travers le conduit de versage (60).

5. Bouilloire (2) selon l'une quelconque des revendications précédentes, dans laquelle la bouilloire comprend un premier joint torique (42) positionné dans une rainure (44) formée sur une face périphérique externe (46) de la bague d'étanchéité (30), le premier joint torique (42) étant positionné entre la bague d'étanchéité (30) et une face intérieure (36) du pot interne (10).

6. Bouilloire (2) selon l'une quelconque des revendications précédentes, dans laquelle la bague d'étanchéité (30) comporte une proéminence axiale (30B) d'indexation du couvercle (24) propre à être reçue au moins partiellement dans un logement d'indexage correspondant (48) formé sur une face périphérique extérieure (50) du couvercle lorsque le couvercle (24) vient fermer le contenant.

7. Bouilloire (2) selon l'une quelconque des revendications précédentes, dans laquelle la bague d'étanchéité (30) comprend une saillie radiale (52) orientée vers l'extérieur du contenant (4) et reçue dans un orifice (54) formé au travers du pot interne (10).

8. Bouilloire (2) selon l'une quelconque des revendications précédentes, dans laquelle le couvercle (24) comprend sur une périphérie de la face inférieure (26) un joint d'étanchéité (59) propre à venir en contact axial avec la bague d'étanchéité (30) lorsque le couvercle vient fermer le contenant.

9. Bouilloire (2) selon l'une quelconque des revendications précédentes, dans laquelle la bague d'étanchéité (30) comprend une portion annulaire (30A) formant un joint d'étanchéité en appui axial et radial avec une face intérieure (36) du pot interne (10) et notamment avec l'excroissance radiale intérieure (34), et en ce que la portion annulaire (30A) comprend au moins une projection axiale (40), de préférence plusieurs projections axiales (40), s'étendant vers un fond (37) du pot interne (10) et formant au moins un élément d'accroche de la bague d'étanchéité (30) à l'excroissance radiale intérieure (34).

10. Bouilloire (2) selon l'une quelconque des revendications précédentes, dans laquelle la bouilloire comprend un circuit d'évacuation de vapeur configuré pour convoyer, à l'extérieur du volume interne (6), de la vapeur générée dans le volume interne (6) lors d'une ébullition de l'eau contenue dans le volume interne (6), le circuit d'évacuation de vapeur comprenant :
∘ un premier orifice d'admission de vapeur (80) et un deuxième orifice d'admission de vapeur (82) qui sont prévus sur le couvercle (24) et qui débouchent dans la face inférieure (26) du couvercle (24) et à proximité d'un bord périphérique de la face inférieure (26) du couvercle (24), les premier et deuxième orifices d'admission de vapeur (80, 82) étant configurés pour être reliés fluidiquement au volume interne (6) délimité par le contenant (4), et pour être disposés de part et d'autre d'un plan vertical médian (P) de la bouilloire (2) qui passe par le bec verseur (14) et la poignée de préhension (12), et
∘ une chambre interne (88) délimitée par le couvercle (24), et un premier tube d'écoulement de vapeur (84) comprenant une première ouverture d'entrée de vapeur reliée fluidiquement au premier orifice d'admission de vapeur (80) et une première ouverture de sortie de vapeur (86) débouchant dans la chambre interne (88), et un deuxième tube d'écoulement de vapeur (90) comprenant une deuxième ouverture d'entrée de vapeur reliée fluidiquement au deuxième orifice d'admission de vapeur (82) et une deuxième ouverture de sortie de vapeur (92) débouchant dans la chambre interne (88).
